# EUROPEAN PATENT APPLICATION

(11) **EP 2 323 362 A2**
(43) Date of publication of application: **18.05.2011**
(21) Application number: 10186566.5
(22) Date of filing: 05.10.2010
(51) Int. Cl.: H04N 1/00

(54) **Geotagging using barcodes**

(30) Priority: 06.10.2009 US 249183 P; 05.05.2010 US 774331
(71) Applicant: SAMSUNG ELECTRONICS CO., LTD., Suwon-si Gyeonggi-do 442-742 (KR)
(72) Inventor: KHAN, Farooq U, Suwon-si Gyeonggi-do 442-742 (KR)
(74) Representative: Jenkins, Richard Gavin

(57) **Abstract**

A method and apparatus for associating geotag information obtained from a barcode with image or video data is provided. The apparatus includes a camera module for capturing an image or video of an object, a barcode decoding module for receiving barcode data related to the object and for extracting geotag information from the barcode data, and a processor for associating the geotag information with the image or video.

## Description

### CROSS-REFERENCE TO RELATED APPLICATIONS

This application claims the benefit under 35 U.S.C. § 119(e) of a U.S. Provisional application filed on October 6, 2009 in the U.S. Patent and Trademark Office and assigned Serial No. 61/249,183, the entire disclosure of which is hereby incorporated by reference.

### BACKGROUND OF THE INVENTION

### 1. Field of the Invention:

Aspects of the present invention relate to geotagging. More particularly, aspects of the present invention relate to creating barcodes based on geotags and reading barcodes corresponding to geotags.

### 2. Description of the Related Art:

Geotagging is a process of adding geographical identification metadata to various media, such as photographs, video, websites, or RSS (most commonly translated as "Really Simple Syndication") feeds. A geotag is a form of geospatial metadata usually including latitude and longitude coordinates, though they can also include altitude, bearing, accuracy data, place names, and other identifying information. The location information can also be encoded in a standard format, such as Geography Markup Language (GML).

Geotagging can help users find a wide variety of location-specific information. For example, one can find images taken near a given location by entering latitude and longitude (and optionally altitude for 3D location) coordinates into a geotagging-enabled image search engine. Geotagging-enabled information services can also potentially be used to find location-based news, websites, or other resources.

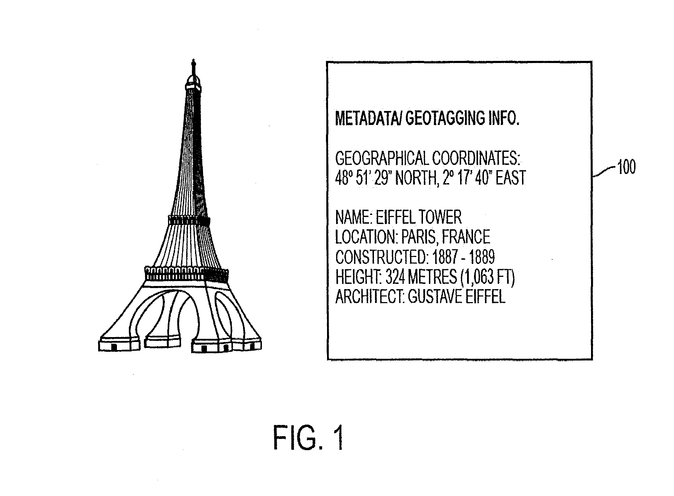

FIG. 1 illustrates image metadata or geotagging information according to the related art.

Referring to FIG. 1, with respect to photos stored in JPEG file format, for example, the geotag information is typically embedded in the metadata stored in Exchangeable Image File Format (EXIF) or Extensible Metadata Platform (XMP) format. FIG. 1 illustrates an example of metadata or geotagging information. These data are not visible in the picture itself but are read and written by special programs and most digital cameras and modern scanners.

However, the current geotagging methods depend upon the Global Positioning System (GPS) for location information. GPS-based geotagging suffers from various drawbacks, including poor performance in indoor locations and other limited-reception environments, such as an urban canyon. Moreover, GPS-based geotagging information only provides location information without other useful details, such as place name and the like.

Another emerging trend in mobile services is barcodes, which are fast gaining traction as enablers for online content and services. Barcodes storing addresses and URLs may appear in magazines or other print media; or on signs, buses, business cards, or any object that users might need information about. Users with a camera phone equipped with the correct reader software can scan the image of the barcode. Generally, the phone's browser will automatically launch in response to receiving the barcode and redirect to the programmed URL. This act of linking from physical world objects is known as a hardlink or physical world hyperlinks. Users can also generate and print their own barcodes for others to scan.

Types of barcodes include one-dimensional (ID) and two-dimensional (2D) barcodes. ID barcodes (also called linear barcodes) are one of the most widespread and well-known global identification applications and can be seen anywhere in the world. The standards for 1D barcodes have been developed and adopted since the early 1970's. 1D barcodes are read by laser-based scanners (currently at point-of-sale and throughout the supply chain) and camera-based readers. An example of a 1D barcode is the Universal Product Code (UPC) found on most products, where a Global Trade Identification Number (GTIN) is encoded in UPC symbology. The first and last digits are always placed outside the symbol to indicate Quiet Zones that are necessary for barcode scanners to work properly.

2D barcodes can contain more information than conventional linear barcodes, such as the UPC code. The conventional barcodes get wider as more data is encoded, and eventually become too wide to be useful. The 2D barcodes make use of the vertical dimension to store more data in a similar space. Several 2D barcodes symbologies have been standardized by the International Organization for Standardization (ISO) and the International Electrotechnical Commission (IEC). The ISO/IEC 18004 standard specifies a 2D barcode symbology referred to as Quick Response (QR) code. Each QR Code symbol is constructed of nominally square modules set out in a regular square array. The QR code includes an encoding region and function patterns, namely finder, separator, timing patterns, and alignment patterns. Function patterns generally do not encode data. The symbol is surrounded on all four sides by a quiet zone border.

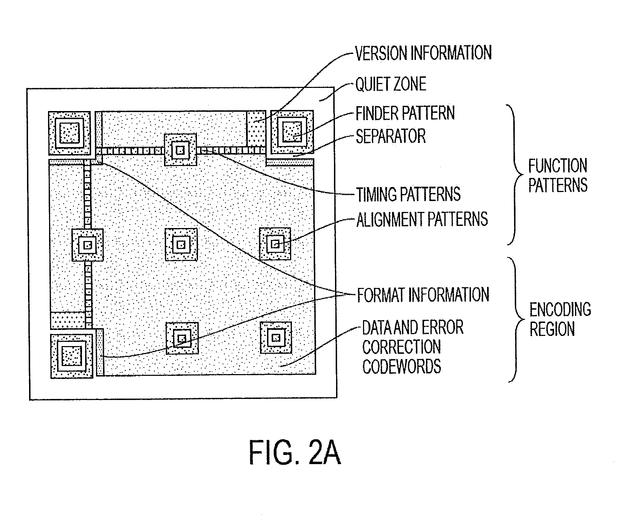

FIG. 2A illustrates a structure of a QR barcode according to the related art.

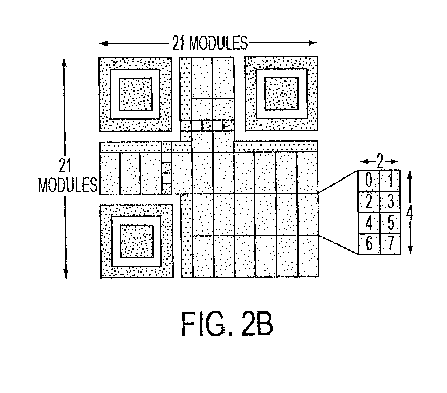

Referring to FIG. 2A, QR Code 2005 symbols have forty sizes, referred to as Version 1, Version 2, and so on up to Version 40. Version 1 measures 21 modules x 21 modules, Version 2 measures 25 modules x 25 modules, with each successive version increasing in steps of 4 modules per side up to Version 40, which measures 177 modules x 177 modules. The Version 7 symbol is illustrated in FIG. 2A, while the Version 1 symbol is illustrated in FIG. 2B.

FIG. 2B illustrates a structure of a Version 1 symbol of a QR barcode according to the related art.

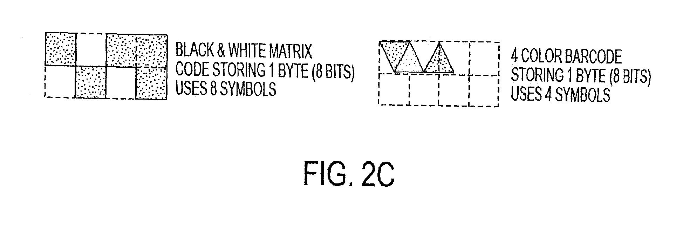

Referring to FIG. 2B, the data is encoded in 2x4 blocks with each block carrying 8-bits of data. Another example of a 2D barcode is illustrated in FIG. 2C.

FIG. 2C illustrates a High Capacity Color Barcode (HCCB) according to the related art.

Referring to FIG. 2C, the HCCB, also branded Microsoft Tag, is a type of barcode that uses colored triangles, instead of black-and-white lines or squares used by other barcode systems.

### SUMMARY OF THE INVENTION

An aspect of the present invention is to address at least the above-mentioned problems and/or disadvantages and to provide at least the advantages described below. Accordingly, an aspect of the present invention is to provide an apparatus and method for capturing 3D video using multiple independent 2D video capture devices.

According to an aspect of the present invention, an image and video geotagging device is provided. The device includes a camera module for capturing an image or video of an object, a barcode decoding module for receiving barcode data related to the object and for extracting geotag information from the barcode data, and a processor for associating the geotag information with the image or video.

According to another aspect of the present invention, a method of associating geotag information with related image or video data is provided. The method includes receiving barcode data, extracting geotag information from the barcode data, and associating the geotag information with image or video data.

According to another aspect of the present invention, a method of providing geotag information to a user is provided. The method includes obtaining geotag information for an object or location, converting the geotag information into a barcode; and providing the barcode to the user.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is an example of image metadata or geotagging information according to the related art;

FIG. 2A is a structure of a Quick Response (QR) code 2005 symbol according to the related art;

FIG. 2B is a version 1 of a QR code 2005 symbol according to the related art;

FIG. 2C illustrates a High Capacity Color Barcode (HCCB) according to the related art;

FIG. 3 illustrates a method of encoding geotagging information in a barcode, according to an exemplary embodiment of the present invention;

FIG. 4 illustrates extracting geotagging information from a barcode and appending the geotagging information to an image or video file, according to an exemplary embodiment of the present invention;

FIG. 5 is a flowchart showing barcode based geotagging according to an exemplary embodiment of the present invention;

FIG. 6 illustrates an image and video geotagging device according to an exemplary embodiment of the present invention; and

FIG. 7 illustrates a decoding method for a QR code according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

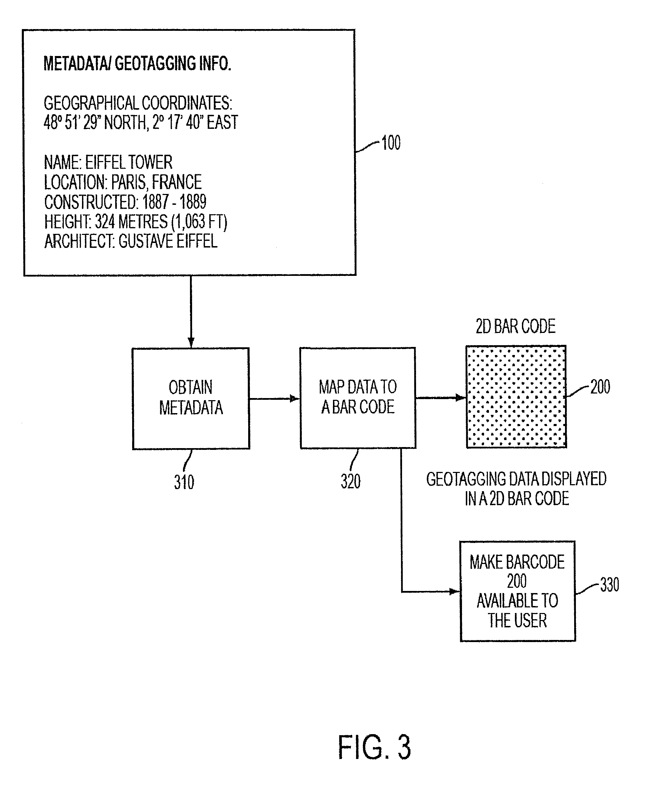

A bar-code based geotagging scheme according to exemplary embodiments of the present invention is described herein. According to exemplary embodiments of the present invention, geotagging metadata, such as latitude and longitude coordinates and a place name for an object, is encoded onto a barcode as illustrated in FIG. 3 and displayed at or near the object. The geospatial information can be obtained from one or multiple sources such as from a GPS system and/or from a geospatial database.

FIG. 3 illustrates a method of encoding geotagging information in a barcode according to an exemplary embodiment of the present invention.

Referring to FIG. 3, geotagging information 100 for an image or video is obtained in step 310. The geotagging information 100 includes location information as well as additional information about an object. For example, the geotagging information 100 illustrated in FIG. 3 relates to the Eiffel Tower. Accordingly, the additional information includes information about the city where the Eiffel Tower is located (Paris, France), the architect (Gustav Eiffel), the height (324 meters or 1,063 feet), and the date of construction (1887-1889). The additional information included in the geotagging information may vary depending on the related object or location. For example, geotagging information for a painting might include an artistic style or period or the name of the museum in which the painting is exhibited. Additional information for a battleground photograph might include information about the war in which the battle was fought and the victorious side in the battle.

The geotagging information can be obtained from several sources, including an on-line geospatial database, GPS system or similar global satellite navigation system, or other source. Multiple sources may also be used to obtain the geotagging data. For example, the geotagging information includes not only latitude and longitude for an object (the Eiffel Tower in the example illustrated in FIG. 3), but also information about the object, including the architect, date of completion, and height. This additional information could be obtained from a well-known or authoritative reference on the subject.

Once the geotagging information 100 is obtained, the geotagging information is mapped to a barcode in step 320. The geotagging information 100 may be mapped to any barcode technology, including the technologies described above with respect to FIGS. 2A-2C (e.g., QR Code, HCCB, and the like). The particular mechanism in which the geotagging information 100 is mapped to the barcode may depend on the particular barcode selected. Once the particular barcode is selected, the mechanism would be apparent to one of ordinary skill in the art, and thus further discussion is omitted for the sake of brevity. A resulting barcode 200 is illustrated in FIG. 3. Although the barcode 200 is illustrated as a 2D barcode, other types of barcodes including 1D barcodes may also be generated.

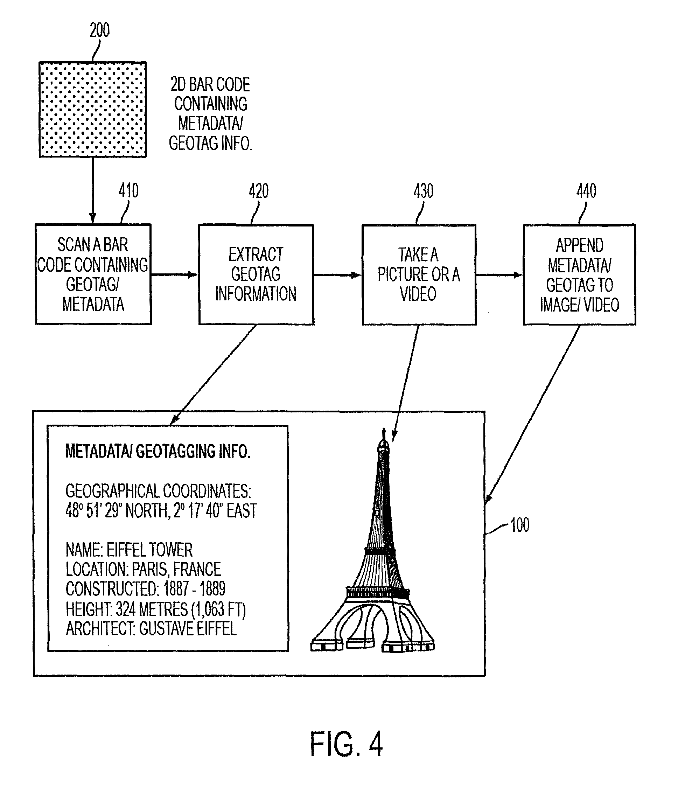

In step 330, the barcode 200 is made available to the user. The barcode 200 can be made available in any of a number of ways. For example, the barcode 200 could be displayed in print form, such as accompanying a magazine article or on an information display in a museum or visitor's center. The barcode 200 could also be displayed in a video presentation. Although not required in all embodiments, the presentation of the barcode 200 may be displayed large enough to be captured clearly by a mobile phone or other portable device having a camera function. A barcode reading application on the mobile phone could identify and interpret the barcode in the photograph. Once the barcode is provided to the user, the user can extract the geotag information contained in the barcode via a process such as the process described below with respect to FIG. 4.

FIG. 4 illustrates extracting geotagging information from a barcode and appending the geotagging information to an image or video file, according to an exemplary embodiment of the present invention.

Referring to FIG. 4, a user scans the barcode 200 in step 410. The user may scan the barcode by taking a picture of the barcode with a mobile phone or other device capable of photography, or by scanning the barcode with a barcode reader. The barcode reader could, for example, be integrated into a mobile phone or other portable device. The geotag information 100 contained in the barcode is extracted in step 420 and stored for later use.

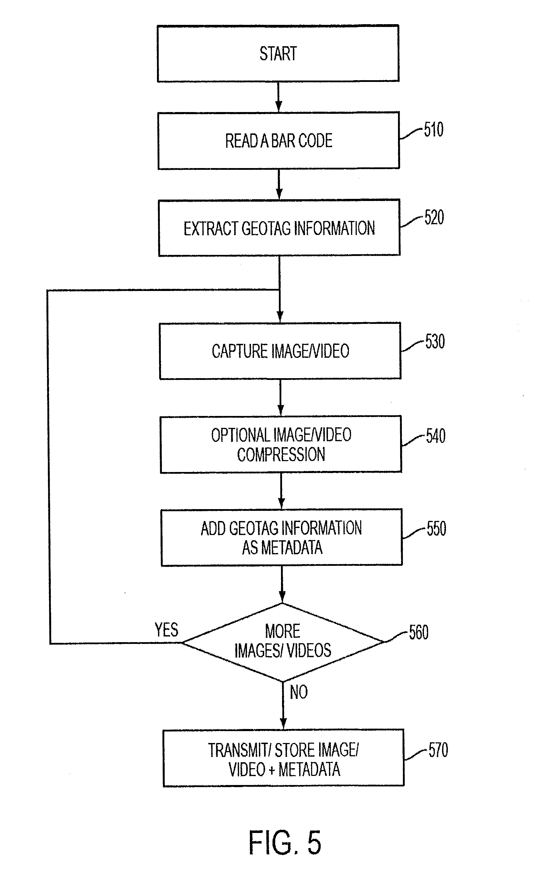

In step 430, the user takes a picture or video of an object corresponding to the geotag information. In the example shown in FIG. 4, the user captures the Eiffel Tower via a photograph or video, after scanning a barcode corresponding to the Eiffel Tower and extracting the geotag information 100 about the Eiffel Tower. Finally, in step 440, the geotag information is appended to metadata of the photograph or video. According to other exemplary embodiments of the present invention, the geotag information 100 may be appended to photographs/video of other objects in proximity to the object or related to the object. In the example of the Eiffel Tower, photographs of locations inside or around the tower might also be appended with the geotag information 100. This principle of obtaining geotag information from and appending the geotag information to the image or video is shown in the flowchart of FIG. 5.

FIG. 5 is a flowchart showing barcode based geotagging according to an exemplary embodiment of the present invention.

Referring to FIG. 5, the mobile device reads a barcode in step 510. The mobile device may read the barcode via a dedicated barcode scanner, or may detect and analyze a barcode found in a photograph or video captured by a camera of the mobile device. In step 520, the mobile device extracts geotag information from the barcode. The geotag information will be appended to video or photographs taken by the mobile device, as described below. The mobile device can employ several techniques to determine which geotag information to use. For example, the mobile device can use geotag information from the most recent barcode scanned. Geotag information from a barcode may also be active for a certain amount of time, after which point the geotag information "expires" and will not be added to additional photographs or video.

In step 530, the mobile device captures video or photographs of the object. Alternatively, the mobile device may capture video of objects in proximity to or related to the object. For example, if the geotag information relates to a museum, the mobile device may capture video or photographs of the museum itself or of exhibits on display at the museum. In step 540, the mobile device performs image or video compression on the image or video. This compression operation is optional; according to some exemplary embodiments of the present invention, step 540 may not be performed.

In step 550, the geotag information is added as metadata to the video or image. The geotag information could be appended to the video or image data itself, or associated with the video or image data in a separate file. In step 560, if additional video or images are to be processed, steps 530-550 are repeated.

The steps illustrated in FIG. 5. For example, the mobile device can perform steps 530-550 of taking a picture or capturing a video first, and perform steps 510 and 520 of scanning a barcode thereafter. The metadata information decoded from the barcode can then be attached to the image or video file.

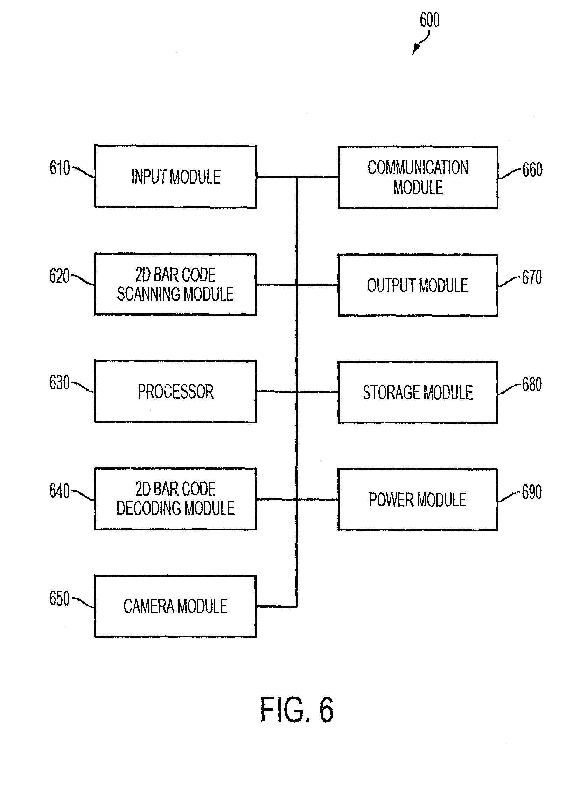

When all video or images have been captured and processed, the resulting video or images and associated metadata are transmitted or stored in step 570. The data may be stored in the mobile device or may be transmitted to an external device. The external device could be, for example, another mobile device or other user equipment, or a remote server. The remote server could be, for example, an image or video hosting service, such as Flickr™ or YouTube™. The mobile device employed in this method may be the image and video geotagging device 600 described with respect to FIG. 6 below.

FIG. 6 illustrates the image and video geotagging device 600 according to an exemplary embodiment of the present invention.

Referring to FIG. 6, the image and video geotagging device 600 includes an input module 610, a 2D barcode scanning module 620, a processing module 630, a 2D barcode decoding module 640, a camera module 650, a communication module 660, an output module 670, a storage module 680, and a power module 690. According to other exemplary embodiments of the present invention, the image and video geotagging device 600 may include additional and/or different units. Similarly, the functionality of two or more of the above units may be integrated into a single component. The image and video geotagging device may be, for example, a mobile phone, personal digital assistant, camera, camcorder, or the like.

The input module 610 and the output module 670 receive input and display output to the user, respectively. For example, the user may input a command to scan a barcode, or to capture an image, via the input module 610. The decoded barcode and any images/video captured may be displayed to the user via the output module 670. The output module 670 may also display a Graphical User Interface (GUI) to permit the user to interact with the image and video geotagging device 600.

The output module 670 may be provided as a Liquid Crystal Display (LCD). In this case, the output module 670 may include a controller for controlling the LCD, a video memory in which image data is stored and an LCD element. If the LCD is provided as a touch screen, the output module 670 may perform a part or all of the functions of the input module 610.

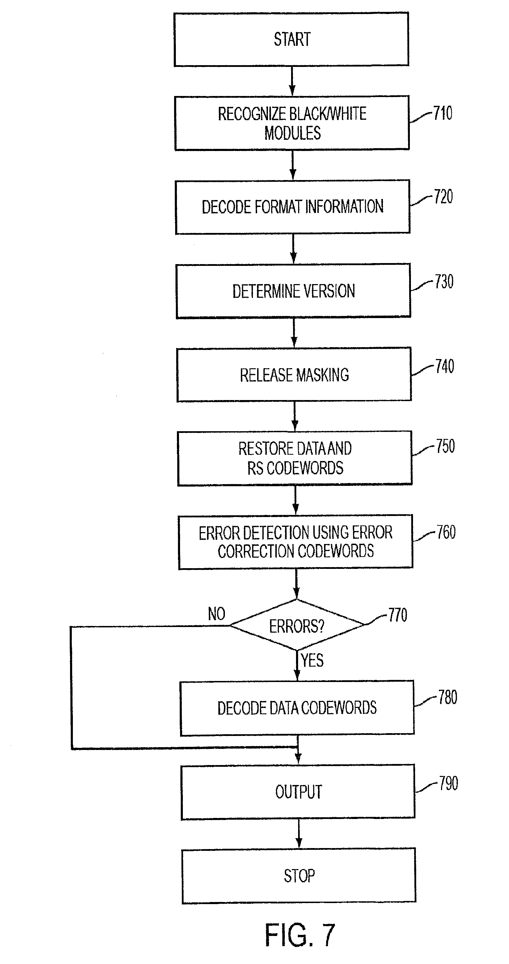

The 2D barcode scanning module 620 and the 2D barcode decoding module 640 scans and decodes, respectively, a 2D barcode, such as the 2D barcode 200. The 2D barcode scanning module 620 scans the 2D barcode (which may be provided in print or in a video, as described above), recognizes the black and white modules contained within the barcode, and then passes this information to the 2D barcode decoding module 640. The 2D barcode scanning module decodes the geotag information contained in the scanned 2D barcode. The decoding operations may include determining the format of the barcode, applying error correction, and the like. An exemplary operation of the 2D barcode scanning module 620 and the 2D barcode decoding module 640 is described below with respect to FIG. 7.

FIG. 7 illustrates a decoding method for a QR code according to an exemplary embodiment of the present invention.

Referring to FIG. 7, in step 710, the 2D barcode scanning module locates and obtains an image of the symbol, recognizes dark and light modules as an array of "0" and "1" bits, and identifies reflectance polarity from finder pattern module coloring. The 2D barcode scanning module 620 provides this information to the 2D barcode decoding module for further processing.

In step 720, the 2D barcode decoding module 640 reads the format information, releases the masking pattern, and performs any necessary error correction on the format information modules. If successful, the symbol is assumed in normal orientation; otherwise, mirror image decoding of format information is attempted. The 2D barcode decoding module 640 then identifies the error correction level and the data mask pattern reference. The error correction level can be obtained either directly, in QR code symbols, or from micro QR code symbol number.

In step 730, the 2D barcode decoding module 640 reads the version information (where applicable) and determines the version of the symbol (from symbol number, in the case of Micro QR Code symbols). In step 740, the 2D barcode decoding module 640 releases the data masking by XORing the encoding region bit pattern with the data mask pattern, the reference of which has been extracted from the format information. In step 750, the 2D barcode decoding module 640 reads the symbol characters according to the placement rules for the model and restores the data and error correction codewords of the message. The 2D barcode decoding module 640 detects errors using the error correction codewords corresponding to the level information in step 760. If any error is detected in step 770, error correction decoding is performed in step 780. In step 780, the 2D barcode decoding module divides data codewords into segments according to the mode indicators and character count indicators. Finally, in step 790, the 2D barcode decoding module 640 decodes the data characters in accordance with the mode(s) in use and outputs the result.

Referring back to FIG. 6, once the geotag information is decoded, the 2D barcode decoding module 640 stores the geotag information in the storage module 680 or provides the geotag information to the processor 630 for association with video or image data. Although the barcode is described as a 2D barcode, 1D barcodes may also be scanned and decoded according to exemplary embodiments of the present invention.

The processor 630 controls overall operations of the image and video geotagging device 600. The processor 630 may control the operation of the image and video geotagging device 600 based on an input from the user via the input module 610. For example, the processor 630 may control the 2D barcode scanning module to scan the barcode, provide the 2D barcode to the 2D barcode scanning module, and associate the geotag information to the image or video data. The processor 630 may store the image or video data and associated geotag information in the storage module 680, or transmit the image or video data and associated geotag information to another device via the communication module 660. The processor 630 also controls the output module to display the GUI to the user.

The camera module 650 captures images and/or video. The captured image and video can be stored in the storage module 680 or transmitted to an external device via the communication module 660. As described above, the captured image or video can be associated with geotag information decoded via the 2D barcode decoding module 640. According to another exemplary embodiment of the present invention, the camera module may also incorporate the functionality of the 2D barcode scanning module 620. In this exemplary embodiment, the 2D barcode scanning module 620 may be omitted from the image and video geotagging device 600. Instead, the camera module 650 captures the barcode as image data. The image data including the barcode is sent to the 2D barcode decoding module 640 or to the processor 630, where the barcode data is extracted from the image. The extracted barcode data is then provided to the 2D barcode decoding module 640, which extracts and decodes the barcode.

The communication module 660 communicates with other devices via a wired or wireless connection. The communication module 660 may, for example, include a hardware port (such as Ethernet) or an antenna for wireless communication. If image or video data and associated geotag information are to be transmitted to an external device, the communication module 660 transmits the image or video data and associated geotag information to the external device via the wired or wireless connection.

The storage module 680 stores data in the image and video geotagging device 600. The storage module 680 can store image or video data captured by the camera module 650 and the geotagging information decoded by the 2D barcode scanning module 640. The geotagging information may be appended to the associated image or video data, or may be stored in a separate file having an association with the corresponding image or video data.

Although not illustrated in FIG. 6, according to another exemplary embodiment of the present invention, the image and video geotagging device 600 may also include a GPS receiver. The GPS receiver determines the location of the image and video geotagging device 600. The location information obtained by the GPS receiver can be used together with barcodes to associate geotagging information with image or video data. For example, GPS location information could be included in geotagging information obtained from a barcode, or GPS location information could be used as geotagging information where no barcode is available.

The power module 690 supplies power to the image and video geotagging device 600. The power module 690 may draw power from a battery or an external power source. The power module 690 may be incorporated within the image and video geotagging device 600, or components of the power module 890 may be provided externally, such as an external power adapter.

According to an exemplary embodiment of the present invention, geotag metadata for an object can be read by a barcode reading device such as a camera-equipped mobile phone. Furthermore, the camera-equipped device can take a picture or video of the object or other objects in or around the object and tag the image or video with the geotag metadata decoded from the barcode.

According to an exemplary embodiment of the present invention, one or more images or videos taken are geotagged with information about an object or scene captured in the images or videos according to geotag information contained in a barcode. This may be the case, for example, when a user visits a museum and scans a single barcode at the museum entrance. All the images or videos taken inside the museum are then geotagged with the museum location, name and other information. Since the geotag information is taken from a barcode instead of, for example, GPS information, reliance on the GPS system for accurate geotag information is reduced, and geotag information can be obtained even when access to a GPS signal is limited.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An image and video geotagging device, comprising:
a camera module for capturing an image or video of an object;
a barcode decoding module for receiving barcode data related to the object and for extracting geotag information from the barcode data; and
a processor for associating the geotag information with the image or video.

2. The image and video geotagging device of claim 1, wherein the camera module captures image data having a barcode, and the processor extracts the barcode from the image data, converts the barcode into the barcode data, and provides the barcode data to the barcode decoding module.

3. The image and video geotagging device of claim 1, further comprising:
a barcode scanner for scanning a barcode, for converting the barcode into the barcode data, and for providing the barcode data to the barcode decoding module.

4. The image and video geotagging device of claim 1, wherein the processor associates the geotag information with the image or video in the form of metadata of the image or video.

5. The image and video geotagging device of claim 1, wherein the barcode data corresponds to a two-dimensional (2D) barcode.

6. The image and video geotagging device of claim 1, further comprising:
a communications module for communicating with an external device and for transmitting the image or video data and associated geotag information to the external device.

7. The image and video geotagging device of claim 1, further comprising:
a storage module for storing the image or video data and the associated geotag information.

8. A method of associating geotag information with related image or video data, the method comprising:
receiving barcode data;
extracting geotag information from the barcode data; and
associating the geotag information with image or video data.

9. The method of claim 8, wherein the receiving of the barcode data comprises:
scanning a barcode; and
generating the barcode data based on the barcode.

10. The method of claim 9, wherein the scanning of the barcode comprises:
capturing an image or video including the barcode; and
extracting the barcode from the captured image or video.

11. The method of claim 9, wherein the scanning of the barcode comprises:
scanning a barcode provided in print form.

12. The method of claim 9, wherein the scanning of the barcode comprises:
scanning a barcode provided in a video.

13. The method of claim 9, further comprising:
transmitting the geotag information and associated video or image data to an external device.

14. The method of claim 9, further comprising:
storing the geotag information in a local storage module.

15. The method of claim 13, wherein the transmitting the geotag information to a user comprises;
obtaining geotag information for an object or location;
converting the geotag information into a barcode; and
providing the barcode to the user in a video.
